# EUROPEAN PATENT SPECIFICATION

(11) **EP 0 470 939 B1**
(45) Date of publication and mention of the grant of the patent: **14.12.1994**
(21) Application number: 91830337.1
(22) Date of filing: 30.07.1991
(51) Int. Cl.: B62D 65/00

(54) **A method of mounting doors on motor vehicle bodies and equipment for carrying out such method**
Verfahren Türen an Fahrzeugkarosserien anzubringen und Ausrüstung zur Durchführung dieses Verfahrens
Procédure pour placer des portes aux carrosseries des véhicules automobiles et équipement pour réaliser cette procédure

(30) Priority: 08.08.1990 IT 6763190
(43) Date of publication of application: 12.02.1992
(73) Proprietor: COMAU S.p.A., 10095 Grugliasco (Torino) (IT)
(72) Inventor: Alborante, Giancarlo, I-10028 Trofarello Torino (IT)
(74) Representative: Bosotti, Luciano

(56) References cited:
- EP-A- 0 261 297
- GB-A- 2 176 445
- US-A- 4 738 022
- US-A- 4 754 415

## Description

The present invention relates to a method of mounting doors automatically on motor-vehicle bodies.

At present, often the doors are positioned manually on the motor-vehicle body before the hinges are fixed. Only the fixing of the hinges to the body, for example by welding, is automated.

This obviously involves the use of more labour and more time for each door-mounting cycle, to the detriment of the cost of the operation.

GB-A-2 176 445 shows the features of the preambles of independent claims 1 and 2 and relates to a plant for automated mounting of doors within the respective door openings of motor-vehicle bodies. The plant comprises a couple of revolving tables each provided with two sliding frames angularly spaced between each other. One frame supports a plurality of measuring devices, for example television cameras, adapted to detect data only referring to the measurement of a door opening. The other frame is adapted to grip a door and then to center it within the respective door opening in consequence of the data detected by the measuring devices.

The object of the present invention is to provide a method which enable the door mounting cycle to be fully automated.

According to the invention, this object is achieved by virtue of the features set forth in the appended claims 1 and 2.

The use of the known technique of detecting images by means of a television camera in association with the use of two different robots, one for locating the door in the door opening and one for automatically welding or bolting the hinges to the body, enables the door-mounting cycle to be fully automated and at the same time reduces the time required for this operation.

For vehicles with four doors, the equipment for carrying out the method includes two assembly stations each with two locating robots situated on opposite sides of the line along which the body advances and four welding robots arranged in pairs on each side of the path of the body, each pair being constituted by a floor-mounted robot and an upper robot supported by a portal structure.

Further advantages and characteristics of the method and the equipment according to the invention will become clear from the detailed description which follows, purely by way of non-limiting example, with reference to the appended drawings, in which:
Figure 1 is a side view of a first assembly station for mounting doors on a motor-vehicle body,
Figure 2 is a view taken on the arrow II of Figure 1,
Figure 3 is a view similar to Figure 1 and shows a second assembly station for mounting doors on the body,
Figure 4 is a view taken on the arrow IV of Figure 3,
Figure 5 is a schematic view showing a first step of the method according to the invention,
Figure 6 is a schematic view showing a second step of the method according to the invention,
Figure 7 is a schematic view showing a third step of the method according to the invention,
Figure 8 is a schematic view showing a fourth step of the method according to the invention,
Figure 9 is a schematic view showing a fifth step of the method according to the invention,
Figure 10 is a plan view of the frame for supporting the door,
Figure 11 is a side view of the frame of Figure 10, and
Figure 12 is a section taken on the line XII-XII of Figure 10.

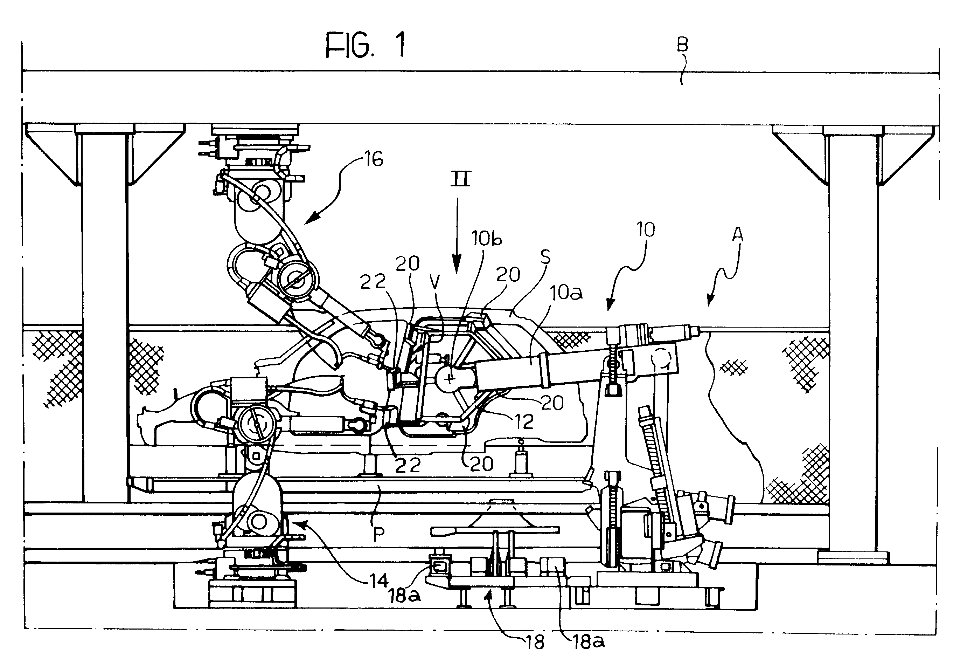

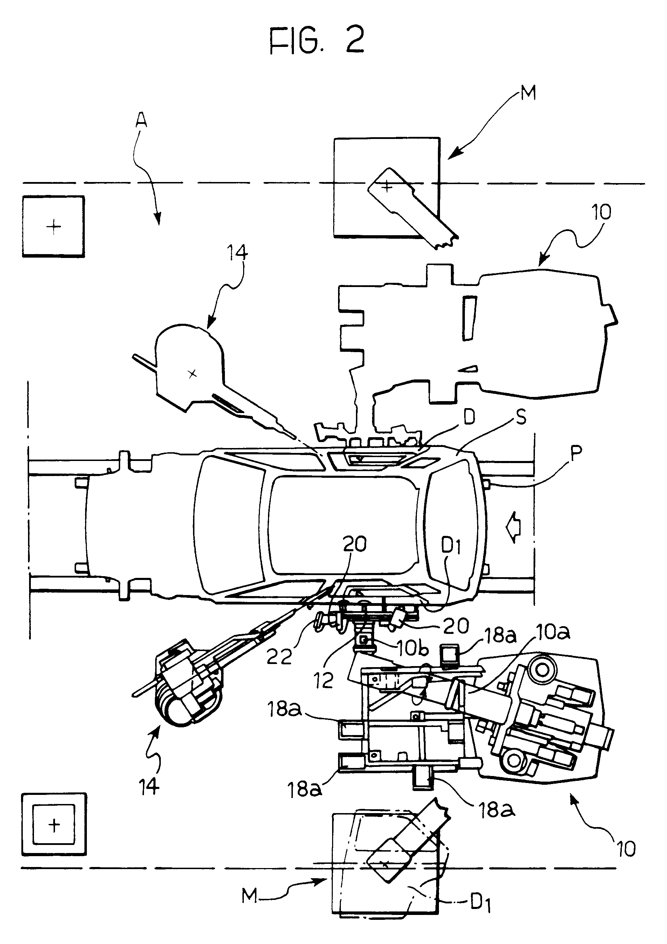

With reference to the drawings, a motor-vehicle assembly line, generally indicated A, includes a plurality of pallets P on which a plurality of bodies S are mounted, Figures 1 and 2 show a first assembly station for mounting doors in rear door openings V in a body S of a four-door motor vehicle. The first assembly station for mounting the rear doors has a pair of assembly robots 10 arranged on opposite sides of the line A and each having an arm 10a whose end has a wrist 10b on which a metal gripping frame 12 known as a "gripper" is mounted. The first assembly station also includes two pairs of welding robots arranged on opposite sides of the line A, each pair including a first welding robot 14 on the floor and a second welding robot 16 which is supported by a portal structure B associated with the assembly line A.

As can clearly be seen in Figure 2, storage racks M are arranged beside the line A for supporting a plurality of rear doors D₁ and, on each side of the line A, there is a calibration device 18, whose function will become clear from the following description.

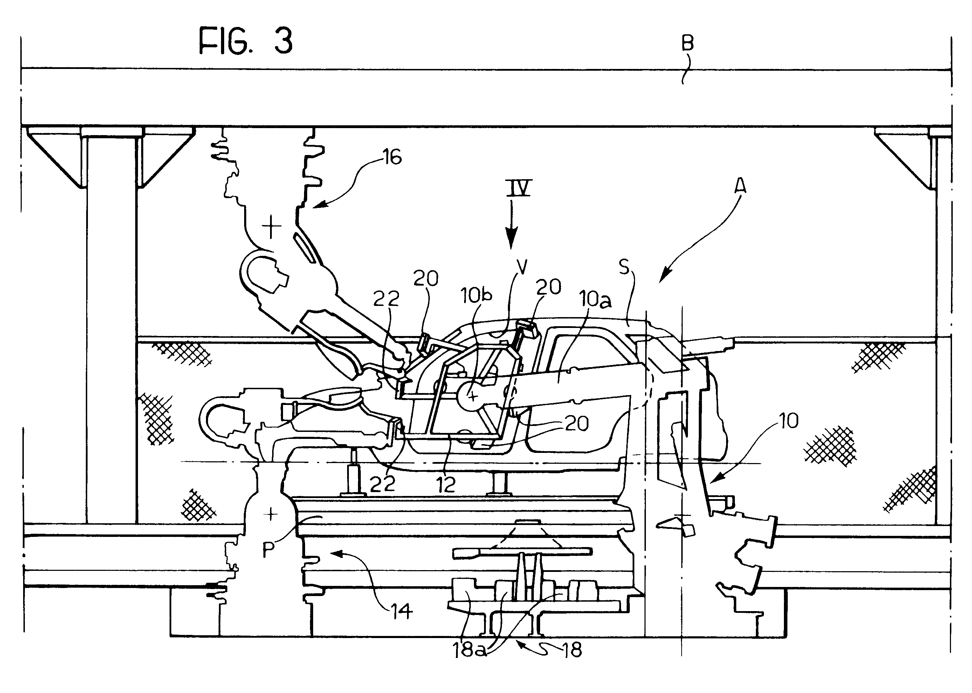

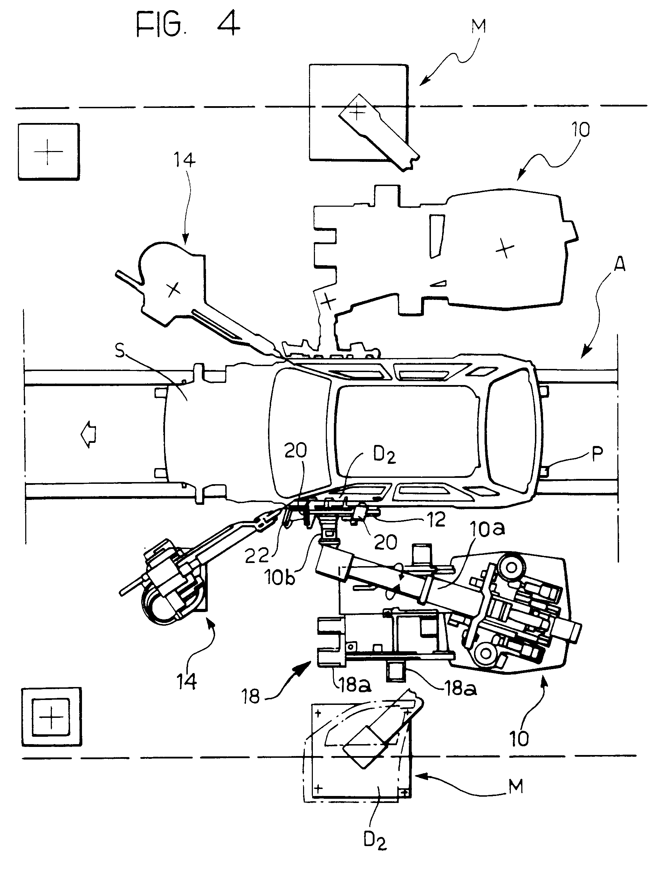

Figures 3 and 4 show a second assembly station for mounting front doors D₂, in which the arrangement of the assembly robots 10 and the welding robots 14 and 16 is substantially identical to that of the first assembly station.

The particular characteristic of the method of mounting the rear doors D₁ and the front doors D₂, which are generally indicated D, consists of the use of four television cameras 20 for each assembly robot 10, the cameras being fixed to the metal frame 12 which picks up the doors and being adapted to provide signals indicative of the position of the arm 10a of the robot 10 relative to the door opening V and to the position of the periphery of the door supported by the frame 12, There are also two auxiliary television cameras 22 for piloting respective welding robots 14 and 16 during the fixing of the hinges to the body S.

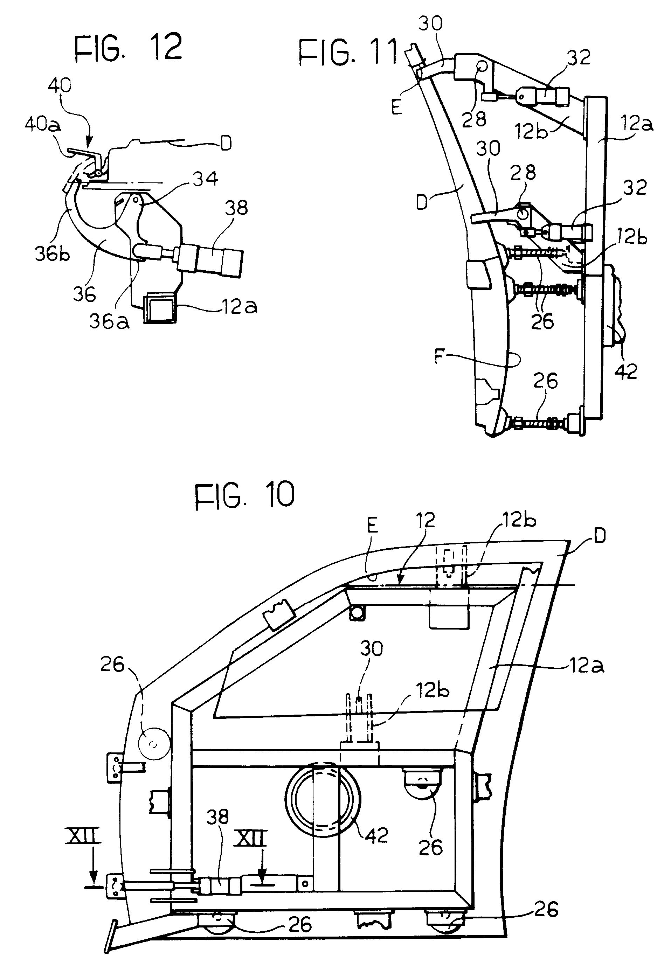

The gripper frame 12 is shown in detail in Figures 10-12 but, for clarity, the television cameras 20 and 22 are not shown therein. The gripper frame 12 has a substantially flat metal structure 12a made of metal sections welded together, to which brackets 12b projecting from the plane identified by the metal structure 12a are fixed. Suction cups 26 of known type are mounted on the metal structure 12a for cooperating with a convex surface F of the door D. Clamping levers 30 operated by jacks 32 and also articulated to the ends of the brackets 12b at 28 are adapted to cooperate with the periphery of the window opening, indicated E. Similarly, each of two shaped levers 36 (Figure 12) articulated to the metal structure 12a of the gripper frame 12 at 34 has a portion 36a connected to an operating jack 38 and a second portion 36b which is adapted to cooperate with a flange 40a of a hinge 40 of the door D so as to locate it in the correct position for fixing to the body. The metal structure 12a of the gripper frame 12 is fixed to the wrist 10b of the assembly robot 10 at 42.

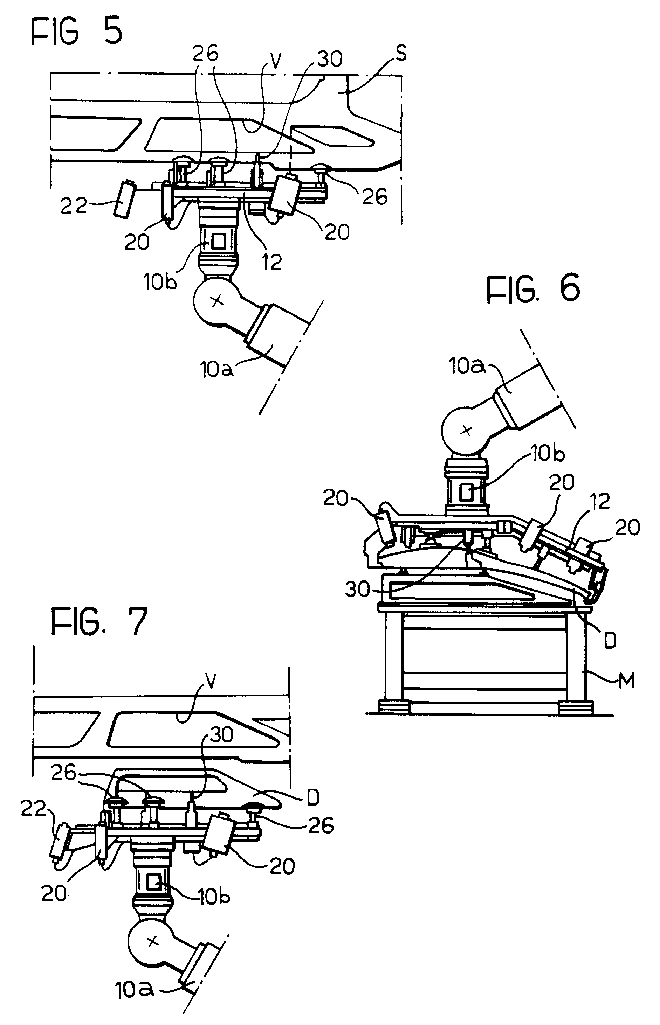

The assembly method according to the invention is illustrated in Figures 5-9. When a motor-vehicle body reaches a predetermined position on the assembly line A, the robot 10 locates the frame 12 in a reference position at the door opening V (Figure 5), according to a predetermined operating program, so that the television camera 20 can supply the central processing unit of the robot with data indicative of the position of the periphery of the door opening V.

The arm 10a of the robot 10 with its gripper frame 12 is then positioned beside the storage rack M on which a door D is disposed (Figure 6). A vacuum source (not shown) is put into communication with the suction cups and jacks 32 are operated so that the door D is made fast with the frame 12.

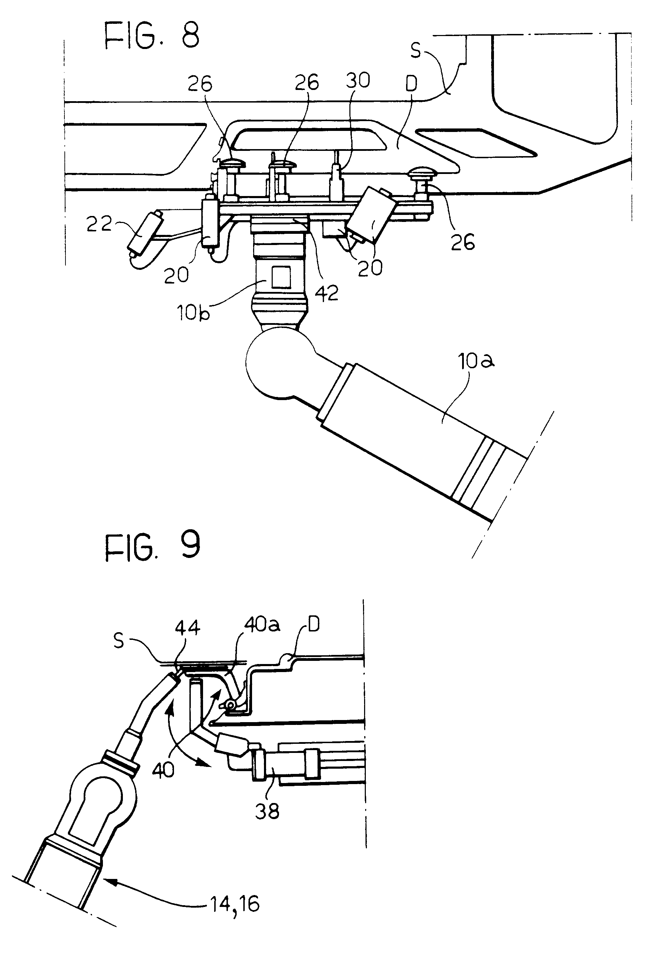

The arm of the robot 10 is then located in a predetermined position in front of the door opening V (this position corresponds to that in which the "reading" of the door opening V was carried out) so as to enable the television cameras 20 to detect the position of the door D relative to the frame, A second batch of data is then sent and a second processing operation takes place in the central control unit to determine the movements to be imparted to the frame 12 in order to insert the door D correctly in its door opening V. Upon completion of the processing, the robot arm 10b inserts the door D in its opening V (Figure 8).

After the door has been inserted in its opening, the two auxiliary television cameras 22 arranged beside the gripper frame 12 start to acquire data relating to the positions of the hinges 40. During this step, the free flange 40a of each hinge 40 is kept in contact with the body S by its shaped lever 36, operated by the jack 38. When the data relating to the positons of the hinges 40 has been acquired, the two welding robots 14 and 16 can start to weld the flanges 40a of the hinges 40 to the body S at 44 (Figure 9) according to a predetermined welding program.

Upon completion of the welding operation, the body S is moved from the first assembly station shown in Figures 1 and 2 to the second assembly station shown in Figures 3 and 4 where the steps described above for the rear doors are repeated for the front doors D₂.

During each cycle of the assembly robot 10, the gripper frame 12 is positioned on the calibration device 18 which has optical sights 18a for resetting the position of the frame 12 in space in order to avoid drift which might prevent the correct location of the doors. Moreover, the calibration or reference device may, to advantage, be associated with the storage rack M on which the doors are disposed.

Naturally, the method and equipment described above may be used for mounting doors on two-door vehicles and may have robots for automatically bolting the hinges 40 onto the motor-vehicle body S instead of the welding robots.

Naturally, it is intended that, the principle of the invention remaining the same, the details of construction and forms of embodiment may be varied widely with respect to those described and illustrated in the drawings, without thereby departing from the scope of the present invention.

## Claims

1. A method of mounting doors automatically on motor-vehicle bodies, including the following steps:
- providing a robot (10) with movable grippers (12) and at least first movable televisual image-detection means (20),
- locating said first televisual image-detection means (20) in a reference position in front of a door opening (V) of a motor-vehicle body (S),
- acquiring data relating to the position of the periphery of the door opening (V) by means of the first televisual image-detection means (20),
- gripping a door (D) from a store (M) by means of the grippers (12) of the robot (10),
- varying the position of the grippers (12) relative to the reference position in consequence of the acquired data relating to the position of the periphery of the door opening (V), and
- locating the gripped door (D) in the corresponding door opening (V),
characterised in that it further includes the steps of:
- providing a single movable arm (10a) of the robot (10) and associating to it the grippers (12), the first televisual image-detection means (20) and second televisual image-detection means (22),
- acquiring data relating to the position in space of the periphery of the gripped door (D) relative to the grippers (12) by means of said first televisual image-detection means (20),
- processing the acquired data by comparing the data relating to the position of the periphery of the door opening (V) with the data relating to the position of the periphery of the gripped door (D), before varying the position of the grippers (12) and locating the door (D) in the corresponding opening (V),
- acquiring data relating to the position of the hinges (40) of the gripped door (D) by means of the second televisual image-detection means (22) while the door (D) is located in the corresponding opening (V), and
- fixing the hinges (40) of the door (D) to the motor-vehicle body (S) by means of auxiliary robots (14,16) subservient to the second televisual image detection means (22).

2. Equipment for mounting doors automatically on motor-vehicle bodies, comprising:
- a first robot (10) including a movable gripper frame (12) for gripping a door (D) of the motor-vehicle,
- first television cameras (20) supported by a movable frame (12) mounted to the first robot (10), said television cameras (20) being adapted to detect data relating to the position in space of a door opening (V) provided in a motor-vehicle body (S), and
- at least one second robot (14,16) for fixing the door hinges (40) to the motor-vehicle body (S),
characterised in that:
the first robot (10) comprises a single movable arm (10a) provided at one end with a single frame (12) which can simultaneously grip a door and support said first television cameras (20), said first television cameras (20) being moreover adapted to detect data relating to the position of the periphery of the gripped door (D) relative to the gripper frame (12), the single gripper frame (12) further supporting second television cameras (22) adapted to detect data relating to the position of the hinges (40) of the gripped door (D) in respect to the body (S), said second robot (14,16) being piloted by the second television cameras (22).

3. Equipment according to Claim 2, characterised in that the gripper frame (12) has lever clamping elements (36) which are articulated to the frame (12a) and each of which is adapted to cooperate with a flange (40a) of the hinge (40) to keep it in contact with the body (S) whilst it is being fixed thereto.

4. Equipment according to Claim 2 or Claim 3, characterised in that it has two robots (14, 16) for welding the two hinges (40) associated with each door (D₁, D₂), each robot being subservient to a respective television camera (22).

## Patentansprüche

1. Verfahren zur automatischen Anbringung Von Türen an Fahrzeugkörpern, aufweisend die folgenden Schritte:
- Vorsehen von bewegbaren Greifern (12) und wenigstens einer bewegbaren Fernseh-Bilderfassungseinrichtung (20) an einem Roboter (10),
- Ausrichten dieser ersten Fernseh-Bilderfassungeinrichtung (20) in einer Referenzposition vor einer Türöffnung (V) eines Fahrzeugkörpers (S),
- Erfassen von Daten bezüglich der Position der Umgebung der Türöffnung(v) mittels der ersten Fernseh-Bilderfassungeinrichtung (20),
- Greifen einer Tür (D) von einem Lager (M) mittels des Greifer (12) des Roboters (10),
- Verändern der Position der Greifer (12) bezüglich der Referenzposition infolge der erfaßten Daten, die sich auf die Position der Umgebung der Türöffnung (v) beziehen, und
- Ausrichten der aufgegriffenen Tür (D) in der entsprechenden Türöffnung (v),
dadurch **gekennzeichne**t,
daß es weiterhin folgende Schritte aufweist:
- Vorsehen eines einzelnen bewegbaren Arms (10a) des Roboters (10) und Zuordnen der Greifer (12), der ersten Fernseh-Bilderfassungeinrichtung (20) und einer zweiten Fernseh-Bilderfassungeinrichtung (22) zu diesem,
- Erfassen von Daten bezüglich der Raumposition der Umgebung der aufgegriffenen Tür (D) bezüglich der Greifer (12) mittels der ersten Fernseh-Bilderfassungeinrichtung (20),
- Verarbeiten der erfaßten Daten durch Vergleich der Daten bezüglich der Position der Umgebung der Türöffnung (v) mit den Daten bezüglich der Position der Umgebung der aufgegriffenen Tür (D), bevor die Position der Greifer (12) verändert wird und die Tür (D) in der entsprechenden Öffung (V) angebracht wird,
- Erfassen von Daten bezüglich der Position der Scharniere (40) der aufgegriffenen Tür (D) mittels der zweiten Fernseh-Bilderfassungeinrichtung (22), während die Tür (D) in der entsprechenden Öffnung(v) angebracht wird, und
- Befestigen der Scharniere (40) der Tür (D) an den Fahrzeugkörper (S) mittels Hilfsrobotern (14,16), die abhängig von der zweiten Fernseh-Bilderfassungeinrichtung (22) arbeiten.

2. Vorrichtung zur automatischen Anbringung von Türen an Fahrzeugkörpern, mit:
- einem ersten Roboter (10) mit einem bewegbaren Greiferrahmen (12) zum Greifen einer Tür (D) des Fahrzeugkörpers,
- ersten Fernsehkameras (20), die durch einen bewegbaren Rahmen (12) gehalten sind, der an dem ersten Roboter (10) angebracht ist, wobei die Fernsehkameras (20) Daten bezüglich der Raumposition einer Türöffnung (v) erfassen, die in einem Fahrzeugkörper (S) vorgesehen ist, und
- wenigstens einem zweiten Roboter (14,16) zur Befestigung der Türseharniere (40) an der Fahrzeugkörper (S),
dadurch **gekennzeichnet**,
daß der erste Roboter (10) einen einzelnen bewegbaren Arm (10a) aufweist, der an einem Ende mit einem einzelnen Rahmen (12) versehen ist, der gleichzeitig eine Tür greifen und die ersten Fernsehkameras (20) halten kann, wobei die ersten Fernsehkameras (20) weiterhin Daten bezüglich der Position der Umgebung der gegriffenen Tür (D) bezüglich des Greiferrahmens (12) erfassen können, wobei der einzelne Greiferrahmen (12) weiterhin zweite Fernsehkameras (22) trägt, die Daten bezüglich der Position der Scharniere (40) der aufgegriffenen Tür (D) bezüglich des Körpers (S) erfassen können, wobei der zweite Roboter (14,16) durch die zweiten Fernsehkameras (22) geleitet ist.

3. Vorrichtung nach Anspruch 2,
dadurch **gekennzeichnet**,
daß der Greiferrahmen (12) Spannhebelelemente (36) aufweist, die am Rahmen (12a) angelenkt sind, und von denen jedes mit einem Flansch (40a) des Scharniers (40) zusammenwirkt, um dieses in Kontakt mit dem Fahrzeugkörper (S) zu halten, während es an dieser befestigt wird.

4. Vorrichtung nach Anspruch 2 oder 3,
dadurch **gekennzeichnet**,
daß sie zwei Roboter (14,16) zum Schweißen von zwei Scharnieren (40) aufweist, die mit jeder Tür (D₁, D₂) verbunden sind, wobei jeder Robotor abhängig von einer entsprechenden Fernsehkamera (22) arbeitet.

## Revendications

1. Procédure de montage automatique de portières sur des carrosseries de véhicules automobiles, comprenant les étapes qui suivent, dans lesquelles :
- on munit un robot (10) de pinces mobiles (12) et d'au moins un premier moyen de détection d'image de télévision (20) mobile,
- on place ledit premier moyen de détection d'image de télévision (20) dans une position de référence située devant une ouverture de portière (V) d'une carrosserie de véhicule automobile (S),
- on obtient des données concernant la position de la périphérie de l'ouverture de portière (V) au moyen du premier moyen de détection d'image de télévision (20),
- on saisit une portière (D) d'un magasin (M) par les pinces (12) du robot (10),
- on fait varier la position des pinces (12) par rapport à la position de référence, suite aux données obtenues concernant la position de la périphérie de l'ouverture de portière (V), et
- on place la portière (D) saisie dans l'ouverture de portière (V) correspondante,
caractérisée en ce qu'elle comprend en outre les étapes dans lesquelles :
- on prévoit un bras mobile (10a) unique du robot (10) et on lui associe les pinces (12), le premier moyen de détection d'image de télévision (20) et un second moyen de détection d'image de télévision (22),
- on obtient des données concernant la position dans l'espace de la périphérie de la portière (D) saisie, par rapport aux pinces (12), au moyen dudit premier moyen de détection d'image de télévision (20),
- on traite les données obtenues en comparant les données concernant la position de la périphérie de l'ouverture de portière (V) avec les données concernant la position de la périphérie de la portière (D) saisie, avant de faire varier la position des pinces (12) et de
placer la portière (D) dans l'ouverture (V) correspondante,
- on obtient des données concernant la position des charnières (40) de la portière (D) saisie à l'aide du second moyen de détection d'image de télévision (22), tandis que la portière (D) est placée dans l'ouverture (V) correspondante, et
- on fixe les charnières (40) de la portière (D) à la carrosserie de véhicule automobile (S), au moyen de robots auxiliaires (14, 16) asservis au second moyen de détection d'image de télévision (22).

2. Equipement de montage automatique de portières sur des carrosseries de véhicules automobiles, comprenant :
- un premier robot (10) comprenant un cadre de saisie (12) mobile, servant à saisir une portière (D) de la carrosserie de véhicule,
- des premières caméras de télévision (20), supportées par un cadre (12) mobile monté sur le premier robot (10), lesdites caméras de télévision (20) étant adaptées à capter des données concernant la position dans l'espace d'une ouverture de portière (V) prévue dans une carrosserie de véhicule (S), et
- au moins un deuxième robot (14, 16) servant à fixer les charnières de portières (40) à la carrosserie de véhicule automobile (S),
caractérisé en ce que
le premier robot (10) comprend un bras mobile (10a) unique, pourvu à l'une des ses extrémités d'un cadre (12) unique qui peut simultanément saisir une portière et supporter lesdites premières caméras de télévision (20), lesdites caméras de télévision (20) étant en outre adaptées à capter des données concernant la position de la périphérie de la portière (D) saisie par rapport au cadre de saisie (12), le cadre de saisie (12) unique supportant en outre des secondes caméras de télévision (22) adaptées à capter des données concernant la position des charnières (40) de la portière (D) saisie par rapport à la carrosserie (S), ledit second robot (14, 16) étant piloté par les secondes caméras de télévision (22).

3. Equipement selon la revendication 2, caractérisé en ce que le cadre de saisie (12) présente des éléments de serrage (36) en forme de levier, qui sont articulés au cadre (12a) et chacun d'entre eux étant adapté à coopérer avec un rebord (40a) de la charnière (40), en vue de la maintenir en contact avec la carrosserie (S), tandis qu'elle est fixée à cette dernière.

4. Equipement selon la revendication 2 ou 3, caractérisé en ce qu'il présente deux robots (14, 16) servant à souder les deux charnières (40) associées a chaque portière (D1, D2), chaque robot étant asservi à une caméra de télévision (22) respective.
